Europäisches Patentamt

European Patent Office

Office européen des brevets

(11) Publication number: **0 051 674**
**B1**

(12) **EUROPEAN PATENT SPECIFICATION**

(45) Date of publication of patent specification: **30.12.86**

(21) Application number: **81901469.7**

(22) Date of filing: **15.05.81**

(86) International application number:
**PCT/US81/00657**

(87) International publication number:
**WO 81/03305 26.11.81 Gazette 81/28**

(51) Int. Cl.⁴: **B 05 D 3/00, B 05 D 3/12,
C 08 L 67/00, C 08 L 33/12,
C 08 K 3/00, B 32 B 35/00,
B 29 C 71/00**

(54) METHOD OF REPARING SURFACE DEFECTS.

(30) Priority: **16.05.80 US 150467**

(43) Date of publication of application:
**19.05.82 Bulletin 82/20**

(45) Publication of the grant of the patent:
**30.12.86 Bulletin 86/52**

(84) Designated Contracting States:
**DE FR SE**

(56) References cited:
**GB-A- 671 416
US-A-2 770 556
US-A-3 701 748
US-A-3 721 642
US-A-3 772 241
US-A-3 844 822
US-A-3 873 475
US-A-3 925 299
US-A-4 160 758
US-A-4 181 547**

(73) Proprietor: **THE BUDD COMPANY
3155 W. Big Beaver Road
Troy, MI 48084 (US)**

(72) Inventor: **ISELER, Kenneth Alfred
9224 Weber Road
Richmond, MI 48062 (US)**
Inventor: **SHAH, Mayur Shantilal
38304 Sumpter
Sterling Heights, MI 48078 (US)**
Inventor: **CONNOLLY, Joseph Dennis
32358 Gloede
Warren, MI 48093 (US)**

(74) Representative: **Finck, Dieter et al
Patentanwälte v. Füner, Ebbinghaus, Finck
Mariahilfplatz 2 & 3
D-8000 München 90 (DE)**

Courier Press, Leamington Spa, England.

## Description

This invention relates to a method of patching a part surface having an imperfection to be repaired prior to futher treatment comprising the steps of preparing a depressed area in the substrate to tbe repaired to remove the imperfection to be repaired, applying an excess of a patching compound, said compound including a thermosetting unsaturated polyester resin as a binder, the resin having associated therewith about 10 to 20 percent by weight of a thermoplactic polymer dissolved in an unsaturated monomer, a catalyst and a filler, heating the applied patching compound to a temperature sufficient to cure the polyester resin, and finishing the cured patch to match the surface of the surrounding substrate: the improvements characterized by using as the polyester resin a polyester resin having a hydroxylcarboxyl ratio of about 5.7 to 0.8, an acid number of at least about 14 and an average molecular weight of about 800 to 5000, and further characterized by the use of two separate and distinct particulate fillers totaling about 20 to 60 percent by weight, the first filler being an inert inorganic filler present in about 5 to 20 percent by weight and a second filler of metallic particles present in about 5 to 15 percent by weight, and about 5 to 25 percent by weight fibrous filler.

Prior art patching compounds are generally designed to have good adhesion to the materials to which they are applied at normal room temperatures and to some extent at temperatures below room temperature down to and including −34,4°C. However, scuh patching compounds have not been formulated which are capable of withstanding temperatures on the order of 190,6 to 204,4°C without substantial shrinkage. Thus, such compounds when used to repair defects in a plastic or metal part cannot be subjected to the normal painting and baking cycle common with original equipment manufacturing processing.

A further problem with prior art compositions is the physical characteristic or sandability. For best results, it is desirable that the cured patching composition have sanding characteristics similar to that of the base material. Thus, upon finishing and sanding, the patched surface, to while an overlying paint or lacquer is to be applied, has a similar texture to the base material.

U.S. Patent 3,873,475 to Barrato et al. Shows a thermosetting polyester resin with hollow glass ballons as the filler. The resin is made thixotropic by the addition of cellulose acetate. U.S. Patent 3,701,748 and 3,772,241 both to Kroekel show a polyester resin with a thermoplastic polymer as an addition to retard shrinkage.

The aim of the invention was to disclose a method for repairing articles with a low shrink polyester resin material which will adhere to the surface imperfection and allow the user to repair such imperfection with a minimal amount of effort and without worrying about the parts cracking or falling out of the repaired area. This aim was reached according to the following claims.

The invention concerns a method of patching a part surface having an imperfection to be repaired prior to further treatment comprising the steps of preparing a depressed area in the substrate to be repaired to remove the imperfection to be repaired, applying an excess of a patching compound, said compound including a thermosetting unsaturated polyester resin as a binder, the resin having associated therewith about 10 to 20 percent by weight of a thermoplasctic polymer dissolved in an unsaturated monomer, a catalyst and a filler, heating the applied patching compound to a temperature sufficient to cure the polyester resin, and finishing the cured patch ·to match the surface of the surrounding substrate: the improvements characterized by using as the polyester resin a polyester resin having a hydroxylcarboxyl ratio of about 5.7 to 0.8, an acid number of at least about 14 and an average molecular weight of about 800 to 5000, and further characterized by the use of two separate and distinct particulate fillers totaling about 20 to 60 percent by weight, the first filler being an inert inorganic filler present in about 5 to 20 percent by weight and a second filler of metallic particles present in about 5 to 15 percent by weight, and about 5 to 25 percent by weight fibrous filler.

According to a preferred embodiment the heating is done by the application of air heated to approximately 148.9 to 176.7°C. for a period of approximately 2 to 3 minutes.

Furthermore it is preferred that said filler contains as inorganic filler about 10 to 15 percent by weight of calcium carbonate having a particle size of about 1 to 10 μm. Furthermore it is preferred that said filler contains as inorganic filler about 10 to 20 percent by weight of talc haing a particle size of about 1 to 10 μm. Finally it is preferred that said filler contains about 5 to 15 percent by weight of metal flake material having a particle size of about 10 to 20 μm.

It is most preferred that said fibrous reinforcing material is glass fiber and that fibers have a cut length of about 0.5 to 6.5 millimeters.

A minor amount of a free radical catalst is added to promote curing. When cured these resins form a solid material which is sandable, and has good adhesion to metal and plastic materials. Further, the material is capable of withstanding normal painting cycles when cured in accordance of the method of this invention.

Resins having the above-mentioned characteristics provide a good thermosetting unsaturated polyester resin which can be cured to form a solid thermoset matrix having good structural integrity when combined with the fillers described hereinafter. The resin preferably has an acid number of at least 14 and a hydroxyl number of at least 14, preferably 14—120, with the preferred acid number range being between about 14—70. Such resins will normally have a molecular weight of about 900—3,500. Resins in this preferred range provide a good combination of relatively rapid gel and cure to a matured product, combined with good physical characteristics. The unsaturated polyester resin is normally present in an amount of about 10 to 30 weight percent dissolved in an aliphatically unsaturated monomer, such as styrene. The monomer chosen will be compatible with the thermosetting resin and also with the other resinous materials present.

Many useful unsaturated polyester resins can be formed for use as starting materials in the practice of this invention. However, three types useful in the practice of this invention will be disclosed in greater detail for the purposes of illustration.

A first type of resin is glycol-maleate type resin. This type of unsaturated polyester resin is generally formed from butylene, propylene or ethylene glycol-maleate polyester product and may contain small quantities of other glycols, for example diethylene or dipropylene glycol, neopentyl glycol or the like. Such glycol-maleate products are prepared by cooking together one mole of maleic acid or anhydride, one mole or propylene glycol, 0.1 mole of ethylene glycol, an esterification catalyst and tertiary butyl catechol or hydroquinone inhibitor. Such glycol-maleate polyesters have the properties of high rigidity, high heat resistance and are highly reactive and readily made into low shrink compositions when incorporated into the resin mixture of this invention.

A second type of unsaturated polyester resin useful in the practice of this invention is a glycol-maleate-phthalate type resin prepared from propylene or ethylene glycol, maleate acid or anhydride, and phthalic is isophthalic acid. Also, miscellaneous glycols could be used such as those discussed with respect to the glycol-maleate type. In general, the ratio of maleate to phthalate is about 3:1. Such products are representatively prepared by cooking together one mole of maleic acid or anhydride, one mole or propylene glycol, 0.1 mole of ethylene glycol, an esterification catalyst and tertiary butyl catechol or hydroquinone inhibitor. Such glycol-maleate polyesters have the properties of high rigidity, high heat resistance and are highly reactive and readily made into low shrink compositions when incorporated into the resin mixture of this invention.

A third example of a resin useful in the practice of this invention is an unsaturated polyester resin of the glycol maleate phthalate type having a higher ratio of phthalate to maleate. These unsaturated polyester resins are also formed from ethylene or propylene glycol, maleate acid or anhydride and isophthalic or phthalic acid plus miscellaneous glycols as discussed with respect to the first and second examples. Resins of this type will have a maleate-phthalate ratio generally in the range of about 2:1. Such resins are characterized by extreme toughness, considerably higher elongation, lower heat distortion and a lower reactivity then either of the previously described resin systems.

Aside from the characteristics of the unsaturated resins set forth hereinbefore, the exact type of reactants used to form the unsaturated polyester resin employed is not critical. Polyester resins are known and conventionally made by the condensation of at least one unsaturated dicarboxylic acid or anhydride and at least one glycol wherein water is removed during the condensation - esterification reaction.

Examples of suitably unsaturated dicarboxylic acids include alpha, beta ethylenically unsaturated dicarboxylic acids and their anhydrides such as fumaric acid, maleate acid and maleate anhydride. Examples of unsaturated polycarboxylic adids and their anhydrides include the phthalic acids, phthalic anhydride, succinic acid, adipic acid, and itaconic acid. Other polycarboxylic acids usable herein include citric acid, pyromellitic acid and trimesic acid. The preferred glycols usable to make the polyester resins used in this invention are the alkylene glycols such as ethylene glycol, propylene glycol, neopentyl glycol, butylene glycol, and bisphenol A, such reactants being well known in the art. Either the dicarboxylic acids or the glycols may be halogenated to reduce the flammability of the molded articles.

The acid numbers and the hydroxyl numbers described here and before and in the claims refer to the unsaturated polyester resin itself. It must therefore be understood that these figures are somewhat higher than would be the case where the hydroxyl and carboxyl numbers are given for a resin which has been dissolved in an unsaturated monomer such as styrene.

The resin compositions of this invention include a low-shrink additive consisting essentially of a thermoplastic polymer, ordinarily added to the thermosetting resin dissolved in an unsaturated monomer such as styrene. Such a low shrinkage polymer is present in any amount of about 10 to 20 parts by weight of total ingredients. This lowshrink additive, when added to the polyester resin, can be added in the form of a thermoplastic powder which is soluble in part or all of the liquid monomer employed as a solvent with respect to the unsaturated polyester resin. Such low-shrink thermoplastic based additives are described in U.S. Patent No. 3,701,748. For the purposes of this invention, it is not necessary that the thermoplastic polymers be compatible with the thermosetting polymers to form an optically heterogenous cured composition.

One example of a suitable thermoplastic material is an acrylic syrup of methylmethacrylate containing about 30 to 40 percent by weight of solid methylmethacrylate dissolved in styrene monomer.

To the combination of resins disclosed hereinbefore, various fillers and resinforcing materials will be added to form the compositions of this invention. For example, a reinforcing fiber will be added to the composition, fiber reinforcement being present in the amount of about 5 to 25 percent by weight of the total composition. Examples of suitable reinforcing fibers are glass fibers, cotton fibers, sisal fibers, Kelvar fibers, asbestos fibers, and other fibers such as metal fibers and whiskers, born fibers and whiskers and grahpite fibers and whiskers. In addition, a wide variety of organic or inorganic fibers may be used. Glass fibers are the most desirable for most applications because of their low cost and high strength.

In addition to the reinforcing fibers, the compositions of this invention will have one or more particulate fillers added to the resinous material. Many different types of fillers are contemplated within the scope of this invention, such as inorganic fillers, i.e., silicates, asbestos, metal carbonates, mica, barytes, clay, diatomaceous earth, microballoons, microspheres, silica, and fuller's earth.

A further filler present is flake or metal particles such as aluminum flake, steel flake, as well as oxides and sulfides of metals. The amount of metal filler will be present in an amount of about 5 to 15 percent by weight of the final composition. The fillers chosen and their amounts will be adjusted to achieve the desired hardness and sandability of the patching compound. For example, the filler might consist of talc, a relatively soft inorganic filler, calcium carbonate, also a moderately soft inorganic filler, and aluminum powder. The physical properties of materials can be adjusted by increasing the amount of metal particulate where it is desired to achieve a metal like consistency or by increasing the amounts of inorganic particulate fillers where it is desired to achieve a softer, more sandable material. The softer materials could be used for patching of imperfect or damaged molded plastic panels, such as those normally used on automobiles while heavily loaded or harder metal filled powders could be used in patching damaged or imperfect metal panels.

To the resin composition is added a free radical polymerization catalyst. Such a catalyst is generally present in the amount of about 1 to 5 parts of catalyst per 100 parts of composition. Such a free radical catalyst is added to the uncured composition, and upon heating to the catalyst activation temperature, the addition-type cross linking polymerization reaction will commence between the polymerizable monomer and the unsaturated polyester resin. Such catalysts are well known in the art. A wide range of free radical generating polymerization catalysts are usable, one group of catalysts being ·the peroxides. Peroxides usable as free radical polymerization catalysts include benzoyl peroxide, lauroyl peroxide, parachlorobenzoyl peroxide, 2,4 - dichlorobenzoyl peroxide, ketone peroxides such as methyl ethyl ketone peroxide, cyclohexanone peroxide, methyl isobutyl ketone peroxide, and other peroxides such as dicumyl peroxide, 2,2' - bis(4,4 - ditertiary butyl peroxy cyclohexyl propane), ditertiary butyl peroxide, cumene hydroperoxide, tertiary butyl cumyl peroxide, and tertiary butyl perbenzoate.

In addition, catalyst promoters can be added in amounts of about 1 to 5 percent by weight of the resin composition. Examples of suitable catalyst promoters are dimethylaniline or diethylaniline added as a 10 percent by weight of active ingredient dissolved in styrene monomer. Such materials can be mixed with the resin composition and will aid the free radical polymerization catalyst in gelling the resin portion of the composition.

One example of how a composition can be made according to this invention is:

| Ingredient | Particle size | % by weight |
|---|---|---|
| Talc | about 1—10 µm | 18 |
| Calcium carbonate | about 1—10 µm | 12 |
| Aluminum flake | about 10—20 µm | 8 |
| Glass fibers | about 0.5 to 6.5 mm | 15 |
| Unsaturated polyester resins | | 25 |
| Methylmethacrylate syrup | | 17 |
| 10% dimethylaniline in styrene | | 3 |
| Benzoyl peroxide paste | | 2 |
| | | 100 |

The above composition provides a mixture which when applied according to the method set forth hereinafter can be heat cured using a heat gun or baking oven to provide a patch essentially free of shrinkage during further heating and processing.

The following procedure outlines one method of using the above composition. For the purposes of illustration it is assumed that a blistered plastic part is being repaired. First, a line is routed around the blister, making an approximately 60° angle from the bottom of the blister to part's surface and the top of the blister or other imperfection is pried off the molded substrate. Any dry fibrous reinforcing material remaining, such as the fiberglass frequently present in molded plastic articles, is ground off the substrate. The resulting area is then sanded by hand to remove any flaring or imperfections left by cleaning out the blistered area.

The prepared area is then cleaned prior to applying the resin composition such as by the use of dry air to provide a dry, dustfree surface.

After preparation and cleaning, the composition detailed above comprising fillers and resins was mixed with the free radical catalyst, and the resulting mixture applied to the prepared area. A slight excess of the resin composition is used to allow for any shrinkage of the material during heat curing. The resulting uncured patch extends above the surface of the substrate being repaired.

The resulting patch is cured by heating, one method being directing hot air from a hot air heat gun, such as those normally available in laboratory and parts supply houses onto the patch. The gun is held at a distance of about 15.24 to 20.32 cm for approximately two to three minutes. During the heating the patching material will cure and will become tightly bonded to the underlying prepared substrate.

After curing, the patch area and the surrounding surface of the part can be sanded using normal sanding and surface finishing techniques. If for some reason a large void should be present in the repaired area, the resulting void can be filled by repeating the above steps. Should there be only minor sanding porosity present, as is the normal case with the composition of this invention, then a standard pitfiller containing small amounts of iron oxide can be smoothed into the resulting porosity to provide an essentially flat porosity-free surface.

The resulting repaired part can be placed on normal painting lines for finishing. Generally during processing on these lines, the part will be primed and be given one or more finish coats if colored paint. The paint coats will be baked at temperatures generally exceeding 49°C. A patch made according to this invention is capable of being processed on these standard processing lines at temperatures in excess of 49°C without the patch separating from the underlying substrate due to shrinkage. Such a feature allows repair of parts which would normally be scrapped prior to painting, resulting in substantial cost savings to the user and also considerable less waste of valuable and increasingly expensive resins made from hydrocarbon materials.

**Claims**

1. A mehtod of patching a part surface having an imperfection to be repaired prior to further treatment comprising the steps of preparing a depressed area in the substrate to be repaired to remove the imperfection to be repaired, applying an excess of a patching compound, said compound including a thermosetting unsaturated polyester resin as a binder, the resin having associated therewith about 10 to 20 percent by weight of a thermoplastic polymer dissolved in an unsaturated monomer, a catalyst and a filler, heating the applied patching compound to a temperature sufficient to cure the polyester resin, and finishing the cured patch to match the surface of the surrounding substrate: the improvements characterised by using as a the polyester resin a polyester resin having a hydroxyl-carboxyl ratio of about 5.7 to 0.8, an acid number of at least about 14 and an average molecular weight of about 800—5000, and further characterized by the use of two separate and distinct particulate fillers totaling about 20 to 60 percent by weight, the first filler being an inert inorganic filler present in about 5 to 20 percent by weight and a second filler of metallic particles present in about 5 to 15 percent by weight, and about 5 to 25 percent by weight fibrous filler.

2. The method of claim 1 wherein said heating is done by the application of air heated to approximately 148.9—176.7°C for a period of approximately 2 to 3 minutes.

3. The method of claim 1 or 2 wherein said filler contains as inorganic filler about 10 to 15 percent by weight of calcium carbonate having a particle size of about 1—10 μm.

4. The method of claim 1 or 2 wherein said filler contains as inorganic filler about 10 to 20 percent by weight of talc having a particle size of about 1—10 μm.

5. The method of claims 1—4 wherein said filler contains about 5 to 15 percent by weight of metal flake material having a particle size of about 10 to 20 μm.

6. The method of claims 1—5 wherein said fibrous reinforcing material is glass fiber.

7. The method of claim 6 wherein said glass fibers have a cut length of about 0.5 to 6.5 millimeters.

**Patentansprüche**

1. Verfahren zum Ausbessern eines eine fehlerhafte Stelle aufweisenden, auszubessernden Teil einer Oberfläche vor der Weiterbehandlung, das folgende Verfahrensstufen umfaßt: Herstellen eine vertieften Fläche im auszubessernden Substrat zwecks Entfernung der auszubessernden fehlerhaften Stelle, Aufbringen eines Überschusses an Ausbesserungsmasse, die als Bindemittel ein warmhärtbares, ungesättigtes Polyesterharz, wobei mit dem Harz etwa 10 bis 20 Gew.-% eines in einem ungesättigten Monomeren gelösten, warmhärtbaren Polymeren verbunden sind, sowie außerdem einen Katalysator une einen Füllstoff enthält, Erwärmen der aufgebrachten Ausbesserungsmasse auf eine zum Aushärten des Polyesterharzes ausreichende Temperatur, und Endbeareitung der gehärteten ausgebesserten Stelle, so daß sie der Oberfläche des umliegenden Substrats entspricht, wobei die Verbesserungen des Verfahrens gekennzeichnet sind durch die Verwendung eines Polyesterharzes mit einem Hydroxyl - Carboxyl - Verhältnis von etwa, 5,7 bis 0,8, einer Säurezahl von mindestens etwa 14 und einem durchschnittlichen Molekulargewicht von etwa 800 bis 5000 als Polyesterharz, und ferner durch die Verwendung von zwei getrennten und verschiedenen, in Teilchenform vorliegenden Füllstoffen mit einem Gesamtanteil von etwa 20 bis 60 Gew.-%, wobei der erste Füllstoff ein inerter anorganischer, in einem Anteil von etwa 5 bis 20 Gew.-% vorliegender Füllstoff ist und der zweite Füllstoff in Form von metallischen Teilchen in einem Anteil von etwa 5 bis 15 Gew.-% und in Form von faserförmigem Füllstoff in einem Anteil von etwa 5 bis 25 Gew.-% vorliegt.

2. Verfahren nach Anspruch 1, wobei das Erwärmen durch Anwendung von während eines Zeitraumes von ungefähr 2 bis 3 Minuten auf etwa 148,9 bis 176,7°C erhitzter Luft erfolgt.

3. Verfahren nach Anspruch 1 oder 2, wobei der Füllstoff als anorganischen Füllstoff etwa 10 bis 15 Gew.-% Calciumcarbonat mit einer Teilchengröße von etwa 1 bis 10 μm enthält.

4. Verfahren nach Anspruch 1 oder 2, wobei der Füllstoff als anorganischen Füllstoff etwa 10 bis 20 Gew.-% Talk mit einer Teilchengröße von etwa 1 bis 10 μm enthält.

5. Verfahren nach Ansprüchen 1 bis 4, wobei der Füllstoff etwa 5 bis 15 Gew.-% Metallschuppen mit einer Teilchengröße von etwa 10 bis 20 μm enthält.

6. Verfahren nach Ansprüchen 1 bis 5, wobei das faserförmige Verstärkungsmaterial Glasfaser ist.

7. Verfahren nach Anspruch 6, wobei die Glasfasern eine Schnittlänge von etwa 0,5 bis 6,5 mm aufweisen.

**Revendications**

1. Procédé pour mettre une pièce sur une partie de surface présentant une imperfection à réparer avant traitement ultérieur comprenant les étapes de préparation d'une surface déprimée dans le substrat à réparer pour éliminer l'imperfection à réparer, l'application d'un excès de composé de rapiéçage, ledit composé comprenant une résine de polyester insaturé durcissant à la chaleur en tant que liant, la résine comportant associé avec elle environ 10 à 20% en poids d'un polymère thermoplastique dissous dans un monomère insaturé, un catalyseur et une charge, le chauffage du composé de rapiéçage appliqué à une température suffisante pour durcir la résine de polyester et le finissage de la pièce durcie pour égaliser la surface du substrat qui l'entoure: les perfectionnements caractérisés par l'utilisation en tant que résine de polyester d'une résine de polyester ayant un rapport hydroxyle-carboxyle d'environ 5,7 à 0,8, un nombre d'acide d'au moins environ 14 et un poids moléculaire moyen d'environ 800 à 5,000 et en outre caractérisé par l'utilisation de deux charges sous forme particulaire séparées et distinctes totalisant environ 20 à 60% en poids, la première charge étant une charge inorganique inerte présente à raison d'environ 5 à 20% en poids et la deuxième charge de particules métalliques présentes à raison d'environ 5 à 15% en poids et environ 5 à 25% en poids de charge fibreuse.

2. Procédé selon la revendication 1, caractérisé en ce que le chauffage est effectué par application d'air chauffé à approximativement 148,9—176,7°C pendant une durée d'environ 2 à 3 minutes.

3. Procédé selon la revendication 1 ou 2, caractérisé en ce que la charge contient comme charge inorganique environ 10 à 15% en poids de carbonate de calcium ayant une dimension de particules d'environ 1 à 10 μm.

4. Procédé selon la revendication 1 ou 2, caractérisé en ce que la charge contient comme charge inorganique environ 10 à 20% en poids de talc ayant une dimension de particules d'environ 1 à 10 μm.

5. Procédé selon les revendications 1 à 4, caractérisé en ce qeu ladite charge contient environ 5 à 15% en poids de matériau métallique sous forme de flocons ayant une dimension de particules d'environ 10 à 20 μm.

6. Procédé selon les revendications 1 à 5, caractérisé en ce que ledit matériau de renforcement fibreux est de la fibre de verre.

7. Procédé selon la revendication 6, caractérisé en ce que lesdites fibres de verre ont une longueur de coupe d'environ 0,5 à 6,5 millimètres.